# EUROPÄISCHE PATENTSCHRIFT

(11) **EP 2 958 693 B1**
(45) Veröffentlichungstag und Bekanntmachung des Hinweises auf die Patenterteilung: **08.05.2019**
(21) Anmeldenummer: 14717971.7
(22) Anmeldetag: 18.02.2014
(51) Int. Cl.: B23B 31/00, B23B 31/11, B23C 5/26

(54) **FRÄSWERKZEUG**
MILLING TOOL
OUTIL DE FRAISAGE

(30) Priorität: 22.02.2013 AT 602013 U
(43) Veröffentlichungstag der Anmeldung: 30.12.2015
(73) Patentinhaber: Ceratizit Austria Gesellschaft m.b.H., 6600 Reutte (AT)
(72) Erfinder: BURTSCHER, Peter, A-6651 Häselgehr (AT); PRAST, Josef, A-6600 Pflach (AT)
(74) Vertreter: Ciesla, Dirk
(86) Internationale Anmeldenummer: PCT/AT2014/000032
(87) Internationale Veröffentlichungsnummer: WO 2014/127391

(56) Entgegenhaltungen:
- DE-B- 1 253 015
- DE-C1- 19 600 239
- DE-U1-202006 014 812
- DE-U1-202008 014 738
- US-A1- 2005 220 551
- US-A1- 2007 081 872
- US-A1- 2012 099 938

## Beschreibung

Die vorliegende Erfindung betrifft ein Fräswerkzeug mit einem Werkzeugschaft und einem stirnseitig an dem Werkzeugschaft befestigten Schneidkopf, eine Verwendung eines solchen Schneidkopfes und ein Verfahren zum Befestigen eines Schneidkopfes an einem Werkzeugschaft eines Fräswerkzeugs.

Bei der zerspanenden Bearbeitung von insbesondere metallischen Werkstoffen kommen üblicherweise Werkzeuge zum Einsatz, die zumindest im Bereich der mit dem Werkstoff in Eingriff gelangenden Schneiden aus einem Hartwerkstoff gebildet sind. Als Hartwerkstoffe kommen dabei neben Hartmetall und Cermets zum Teil auch ultraharte Werkstoffe wie insbesondere polykristalliner Diamant (PKD) oder kubisches Bornitrid (CBN) zum Einsatz. Dabei ist es einerseits bekannt, das gesamte Werkzeug, wie z.B. ein Fräswerkzeug, vollständig aus dem Hartwerkstoff zu fertigen, was allerdings eine relativ große Menge des wertvollen und relativ spröden Hartwerkstoffs erfordert. Andererseits ist es bekannt, einen Werkzeugschaft, der aus einem zäheren und kostengünstigeren Material, wie z.B. Werkzeugstahl, gefertigt sein kann, mit auswechselbaren Bauteilen aus Hartwerkstoff zu bestücken, die mit den Schneiden versehen sind. Diese Lösung hat den Vorteil, dass der Materialbedarf an dem Hartwerkstoff verringert werden kann und bei einem auftretenden Verschleiß der Schneiden nur ein Austausch der auswechselbaren Bauteile aus Hartwerkstoff erfolgen muss.

Insbesondere Fräswerkzeuge sind dabei häufig mit einem Werkzeugschaft aus z.B. Werkzeugstahl ausgebildet, der mit einer Mehrzahl von Wendeschneidplatten bestückt ist, die jeweils eine Mehrzahl von Schneiden aufweisen können, die bei auftretendem Verschleiß sukzessiv durch Indexieren zum Einsatz gebracht werden können. Aufgrund der nur in gewissen Grenzen möglichen Miniaturisierung der Wendeschneidplatten und Aufnahmen, in denen diese befestigt werden, bereitet es Probleme mit dieser Bauart Fräswerkzeuge bereitzustellen, die einen kleinen Durchmesser und gleichzeitig eine relativ große Anzahl an gleichzeitig einsetzbaren Schneiden bzw. Zähnen aufweisen.

DE 20 2006 014 812 U1 und DE 20 2008 014 738 U1 beschreiben jeweils eine Werkzeug-Aufnahme zum Rotationsantrieb eines um eine Rotationsachse rotierenden Werkzeugs mit einem Aufnahmeteil mit einer Aufnahmeöffnung für einen Werkzeug-Einspannschaft, der auf seinem Außenumfang eine Anzahl von Spannflächen und im Bereich jeder Spannfläche einen Schaftradius aufweist, der von einem minimalen Schaftradius in Umfangsrichtung über einen Anstiegswinkelbereich hinweg stetig auf einen maximalen Schaftradius ansteigt. Die Aufnahmeöffnung weist einen Innenquerschnitt mit einem Innenradius auf, der größer oder gleich dem maximalen Schaftradius ist. Innerhalb der Aufnahmeöffnung ist für jede Spannfläche des Einspannschaftes ein starrer, sich ausgehend von dem Innenradius radial nach innen erstreckender Mitnehmeransatz mit einem Anlagebereich für die Spannfläche angeordnet.

Um die Vorteile von auswechselbaren Schneiden aus Hartwerkstoff auch bei Fräswerkzeugen mit kleinen Durchmessern realisieren zu können, wird zum Beispiel in DE 203 06 151 U1 ein Fräswerkzeug vorgeschlagen, das einen Werkzeugschaft aufweist, an dem stirnseitig ein auswechselbarer Schneidkopf befestigt ist, der mit einer Mehrzahl von Schneiden versehen ist. Bei dem in der DE 203 06 151 U1 beschriebenen Fräswerkzeug weist der Werkzeugschaft eine stirnseitige Ausnehmung auf, in die ein Vorsprung an der Unterseite des Schneidkopfes, der exakt die Form der Ausnehmung aufweist, formschlüssig in der axialen Richtung eingeführt wird. Diese Ausgestaltung erfordert jedoch das Einhalten äußerst geringer Toleranzen bei dem Vorsprung an der Unterseite des Schneidkopfes.

Es ist Aufgabe der vorliegenden Erfindung, ein Fräswerkzeug bereitzustellen, dass auch bei kleinem Durchmesser eine große Anzahl an gleichzeitig einsetzbaren Schneiden ermöglicht und dabei eine einfache und dennoch exakte Befestigung eines Schneidkopfes an einem Werkzeugschaft bereitstellt, die keine mechanische Feinbearbeitung des der Befestigung dienenden Bereichs des Schneidkopfes erfordert.

Die Aufgabe wird durch ein Fräswerkzeug nach Anspruch 1 gelöst. Vorteilhafte Weiterbildungen sind in den abhängigen Ansprüchen angegeben.

Der Vorsprung der Klemmverbindung kann dabei gemäß einer bevorzugten ersten Variante an dem Schneidkopf ausgebildet sein und die Ausnehmung an dem Werkzeugschaft. Gemäß einer zweiten Variante kann die Ausnehmung der Klemmverbindung jedoch auch an dem Schneidkopf ausgebildet sein und der Vorsprung an dem Werkzeugschaft. Durch die angegebene Ausgestaltung der Klemmverbindung zwischen dem Schneidkopf und dem Werkzeugschaft wird eine selbstzentrierende und zuverlässige Verbindung zwischen dem Werkzeugschaft und dem Schneidkopf ermöglicht, die keine mechanische Nachbearbeitung des Teils der Klemmverbindung erfordert, der an dem Schneidkopf ausgebildet ist, so dass der Schneidkopf in kostengünstiger Weise in einem pulvermetallurgischen Herstellungsverfahren durch Pressen und Sintern aus pulverförmigem Ausgangsmaterial herstellbar ist. Durch den selbstzentrierenden Effekt der angegebenen Ausgestaltung von Ausnehmung und Vorsprung und durch das kraftschlüssige Zusammenwirken der Klemmflächen mit den zweiten Bereichen der Zentrierflächen werden ferner die auf eine Befestigungsschraube zum Befestigen des Schneidkopfes an dem Werkzeugschaft wirkenden Kräfte sehr gering gehalten, wodurch die Zuverlässigkeit des Fräswerkzeugs erhöht wird. Ferner kann bei der angegebenen Ausgestaltung vorteilhaft erreicht werden, dass die den Kraftschluss bewirkenden Kontaktbereiche der Klemmflächen mit den Zentrierflächen zumindest im Wesentlichen tangential an einen Kreis verlaufen, dessen Mitte sich auf der Längsachse des Fräswerkzeugs befindet. Die den Kraftschluss bewirkenden Kräfte verlaufen in diesem Fall im Wesentlichen in radialer Richtung. Unter im Wesentlichen tangential wird dabei eine Abweichung von der tangentialen Richtung um weniger als 10°, bevorzugt weniger als 8°, mehr bevorzugt weniger als 5° verstanden. Sofern im Rahmen der vorliegenden Beschreibung die Begriffe axial, radial oder tangential oder von diesen abgeleitete Formen verwendet werden, beziehen sich diese Begriffe jeweils auf die Längsachse des Fräswerkzeugs, die gleichzeitig im Betrieb des Fräswerkzeugs die Rotationsachse bildet. Durch die Ausbildung der kraftschlüssigen Verbindung zwischen den Klemmflächen und den zweiten Bereichen der Zentrierflächen ist der Schneidkopf in der Klemmposition ferner selbsthemmend an dem Werkzeugschaft gehalten.

Die Ausnehmung weist eine Mehrzahl von radial nach innen vorspringenden Anschlagabschnitten auf, die eine Rotation des Schneidkopfes relativ zu dem Werkzeugschaft um die Längsachse begrenzen. Durch die Anschlagabschnitte kann die Klemmposition des Schneidkopfes an dem Werkzeugabschnitt exakt vorgegeben werden und die in radialer Richtung wirkenden Klemmkräfte, die den Kraftschluss zwischen dem Schneidkopf und dem Werkzeugschaft bewirken, können zuverlässig begrenzt werden, so dass eine unerwünscht hohe Krafteinwirkung auf die Wände der Ausnehmung verhindert ist. Ferner dienen die Anschlagabschnitte gleichzeitig als Mitnehmerabschnitte, die im Betrieb eine zuverlässige Übertragung der Rotation von dem Werkzeugschaft auf den Schneidkopf vermitteln.

Gemäß einer Weiterbildung verlaufen die Klemmflächen in einem Schnitt senkrecht zur Längsachse betrachtet auf einem gemeinsamen Kreis, dessen Zentrum auf der Längsachse liegt. In diesem Fall werden eine besonders gleichmäßige Einleitung der Klemmkräfte und eine zuverlässige Zentrierung des Schneidkopfes relativ zu dem Werkzeugschaft erreicht. Gemäß einer bevorzugten Ausgestaltung können die Klemmflächen bezüglich einer Rotation um die Längsachse auch eine n-zählige Symmetrie mit n ∈ {2, 3, 4, ...}, bevorzugt n = 3 aufweisen.

Gemäß einer Weiterbildung erstrecken sich die Klemmflächen entlang einer gemeinsamen Zylinder- oder Kegeloberfläche, deren Symmetrieachse mit der Längsachse zusammenfällt. In diesem Fall ist eine besonders einfache Fertigung der Klemmflächen ermöglicht. Insbesondere in einem Fall, bei dem die Klemmflächen an dem Schneidkopf ausgebildet sind, ist eine besonders einfache pulvermetallurgische Fertigung der Klemmflächen ohne mechanische Nachbearbeitung ermöglicht. Im Fall einer Erstreckung entlang einer Kegeloberfläche verjüngt sich der Vorsprung bevorzugt in Richtung seines freien Endes.

Gemäß einer Weiterbildung weist der Vorsprung drei Klemmflächen auf. In diesem Fall wird mit geringen Toleranzanforderungen eine zuverlässige Zentrierung und Befestigung des Schneidkopfes an dem Werkzeugschaft ermöglicht. Bevorzugt sind die Klemmflächen dabei gleichmäßig über den Außenumfang des Vorsprungs verteilt.

Gemäß einer Weiterbildung bilden die Klemmflächen in einem Schnitt senkrecht zu der Längsachse die radial am weitesten hervorstehenden Bereiche des Vorsprungs. In diesem Fall wird zuverlässig eine Krafteinleitung für die kraftschlüssige Verbindung zwischen den Klemmflächen und den Zentrierflächen erreicht, bei der die wirkenden Kräfte im Wesentlichen in radialer Richtung verlaufen.

Gemäß einer Weiterbildung weist der Schneidkopf eine Bohrung zur Aufnahme einer Befestigungsschraube auf und die Bohrung erstreckt sich in der axialen Richtung durch den Schneidkopf hindurch. In diesem Fall ist eine besonders zuverlässige und symmetrische Befestigung des Schneidkopfes an dem Werkzeugschaft erreicht.

Gemäß einer Weiterbildung ist in dem Werkzeugschaft eine koaxiale Gewindebohrung zur Befestigung des Schneidkopfes an dem Werkzeugschaft ausgebildet. Durch die koaxiale Anordnung der Gewindebohrung kann die durch die Gewindebohrung bedingte Schwächung des Werkzeugschaftes gering gehalten werden.

Gemäß einer Weiterbildung ist eine Gewindebuchse vorgesehen, die ein Außengewinde zum Zusammenwirken mit der Gewindebohrung in dem Werkzeugschaft und ein Innengewinde zum Zusammenwirken mit einer Befestigungsschraube zum Befestigen des Schneidkopfes aufweist. Die Gewindebuchse ermöglicht ein zuverlässiges Lösen des Schneidkopfes von dem Werkzeugschaft, wenn ein Austausch des Schneidkopfes erfolgen soll.

Gemäß einer Weiterbildung weist die Gewindebuchse zumindest auf einer dem Schneidkopf zugewandten Seite einen Außendurchmesser auf, der größer ist als ein Innendurchmesser einer Bohrung in dem Schneidkopf. In diesem Fall kann die kraftschlüssige Verbindung zwischen dem Schneidkopf und dem Werkzeugschaft besonders zuverlässig dadurch gelöst werden, dass die dem Schneidkopf zugewandte Seite der Gewindebuchse gegen den Schneidkopf gedrückt wird.

Bevorzugt ist die Gewindebuchse auf einer dem Schneidkopf zugewandten Seite mit einem Profil zum Eingreifen mit einem Schraubwerkzeug versehen, so dass die Gewindebuchse in einfacher Weise zum Lösen der kraftschlüssigen Verbindungen zwischen dem Schneidkopf und dem Werkzeugschaft bewegt werden kann. Bevorzugt kann das Profil dabei z.B. durch ein Innenprofil, wie insbesondere einen Innensechskant gebildet sein.

Bevorzugt weist der Schneidkopf eine Bohrung zur Aufnahme einer Befestigungsschraube auf, deren Durchmesser derart auf das Profil zum Eingreifen mit einem Schraubwerkzeug abgestimmt ist, dass ein Schraubwerkzeug durch die Bohrung in dem Schneidkopf hindurch mit dem Profil in Eingriff bringbar ist. In diesem Fall ist ein besonders komfortabler Austausch des Schneidkopfes ermöglicht. Um dies zu erreichen, können insbesondere zumindest Teile des Profils einen Innendurchmesser aufweisen, der kleiner als der Durchmesser der Bohrung zur Aufnahme der Befestigungsschraube ist.

Gemäß einer bevorzugten Ausgestaltung ist der Vorsprung der Klemmverbindung einstückig mit dem Schneidkopf ausgebildet und die Ausnehmung der Klemmverbindung ist stirnseitig in dem Werkzeugschaft ausgebildet. In diesem Fall sind der in der Klemmposition druckbelastete Vorsprung aus dem üblicherweise spröderen Material des Schneidkopfes und die Ausnehmung in dem zäheren Material des Werkzeugschaftes ausgebildet, so dass ein unerwünschtes Aufplatzen des Materials des Schneidkopfes zuverlässig verhindert werden kann. Bevorzugt ist der Vorsprung dabei in einem gemeinsamen pulvermetallurgischen Herstellungsprozess mit dem Rest des Schneidkopfes ausgebildet, so dass der Vorsprung und der Rest des Schneidkopfes eine im Wesentlichen homogene Gefügestruktur aufweisen.

Gemäß einer anderen Ausgestaltung ist der Vorsprung der Klemmverbindung einstückig mit dem Werkzeugschaft ausgebildet und die Ausnehmung der Klemmverbindung ist in dem Schneidkopf ausgebildet.

Gemäß einer bevorzugten Weiterbildung ist der Schneidkopf aus einem Hartwerkstoff, insbesondere Hartmetall oder einem Cermet, ausgebildet.

Ein Schneidkopf für ein zuvor beschriebenes Fräswerkzeug weist eine Mehrzahl von Schneiden zur zerspanenden Bearbeitung eines Werkstücks und einen einstückig mit dem Schneidkopf ausgebildeten Vorsprung mit einer Mehrzahl von Klemmflächen zum gleichzeitigen Klemmen und Zentrieren des Schneidkopfes in einer Ausnehmung an einem Werkzeugschaft auf. Die Klemmflächen sind zur Ausbildung einer kraftschlüssigen Verbindung mit Zentrierflächen in der Ausnehmung ausgebildet. Die Klemmflächen erstrecken sich in einem Schnitt senkrecht zu einer Längsachse des Schneidkopfes entlang der Kontur eines gemeinsamen Kreises, dessen Zentrum auf der Längsachse liegt.

Durch die Anordnung der Klemmflächen derart, dass sich diese entlang der Kontur des gemeinsamen Kreises erstrecken, wird insbesondere eine selbstzentrierende und zuverlässige Verbindung mit dem Werkzeugschaft ermöglicht, die keine mechanische Nachbearbeitung des Vorsprungs an dem Schneidkopf erfordert. Ferner werden die auf eine Befestigungsschraube zum Befestigen des Schneidkopfes an dem Werkzeugschaft wirkenden Kräfte sehr gering gehalten. Es ist zudem erreicht, dass die den Kraftschluss bewirkenden Kontaktbereiche der Klemmflächen mit den Zentrierflächen zumindest im Wesentlichen tangential an einen Kreis verlaufen, dessen Mitte sich auf der Längsachse befindet.

Gemäß einer Weiterbildung weist der Vorsprung zwischen benachbarten Klemmflächen angeordnete Abflachungen zum Abstützen an radial nach innen vorstehenden Anschlagabschnitten in einer Ausnehmung an einem Werkzeugschaft auf. Durch die Abflachungen kann die Klemmposition des Schneidkopfes in der Ausnehmung exakt vorgegeben werden und die in radialer Richtung wirkenden Klemmkräfte, die den Kraftschluss zwischen dem Schneidkopf und dem Werkzeugschaft bewirken, können zuverlässig begrenzt werden, so dass eine unerwünscht hohe Krafteinwirkung auf die Wände der Ausnehmung verhindert ist. Ferner ist über die Abflachungen im Betrieb des Fräswerkzeugs eine zuverlässige Übertragung der Rotation von dem Werkzeugschaft auf den Schneidkopf ermöglicht.

Gemäß einer Weiterbildung bilden die Klemmflächen in einem Schnitt senkrecht zu der Längsachse die radial am weitesten hervorstehenden Bereiche des Vorsprungs. In diesem Fall wird zuverlässig eine Krafteinleitung für die kraftschlüssige Verbindung zwischen den Klemmflächen und an einer Ausnehmung vorgesehenen Zentrierflächen erreicht, bei der die wirkenden Kräfte im Wesentlichen in radialer Richtung verlaufen.

Gemäß einer Weiterbildung erstrecken sich die Klemmflächen entlang der Kontur einer gemeinsamen Zylinder- oder Kegeloberfläche, deren Symmetrieachse mit der Längsachse zusammenfällt. In diesem Fall ist eine besonders einfache Fertigung der Klemmflächen ermöglicht, insbesondere eine pulvermetallurgische Fertigung der Klemmflächen ohne mechanische Nachbearbeitung.

Die Aufgabe wird auch durch eine Verwendung eines Schneidkopfes gemäß Anspruch 15 gelöst.

Die Aufgabe wird auch durch ein Verfahren zum Befestigen eines Schneidkopfes an einem Werkzeugschaft nach Anspruch 17 gelöst.

Es handelt sich dabei um eine Verwendung eines derartigen Schneidkopfes an einem Werkzeugschaft mit einer Längsachse und einer stirnseitigen Ausnehmung, die umfangsseitig eine Mehrzahl von mit den Klemmflächen zusammenwirkenden Zentrierflächen aufweist. Die Zentrierflächen weisen jeweils einen ersten Bereich auf, bei dem die Zentrierflächen in einem Schnitt senkrecht zur Längsachse einen ersten Abstand zu der Längsachse aufweisen, und der erste Bereich geht in einen zweiten Bereich über, bei dem die Zentrierflächen in dem Schnitt senkrecht zur Längsachse einen kleineren zweiten Abstand zu der Längsachse aufweisen. Bei der Verwendung werden die Klemmflächen in eine kraftschlüssige Verbindung mit den zweiten Bereichen der Zentrierflächen gebracht.

Die Aufgabe wird auch durch ein Verfahren zum Befestigen eines Schneidkopfes an einem Werkzeugschaft nach Anspruch 21 gelöst.

Es handelt sich um ein Verfahren zum Befestigen eines Schneidkopfes an einem Werkzeugschaft eines Fräswerkzeugs, wobei der Werkzeugschaft eine Längsachse aufweist und der Schneidkopf eine Mehrzahl von Schneiden zur zerspanenden Bearbeitung eines Werkstücks aufweist, wobei der Werkzeugschaft und der Schneidkopf über eine Klemmverbindung miteinander verbunden werden, welche Klemmverbindung einen Vorsprung mit umfangsseitig einer Mehrzahl von Klemmflächen und eine Ausnehmung mit umfangsseitig einer Mehrzahl von mit den Klemmflächen zusammenwirkenden Zentrierflächen aufweist, und wobei die Zentrierflächen jeweils einen ersten Bereich aufweisen, bei dem die Zentrierflächen in einem Schnitt senkrecht zur Längsachse einen ersten Abstand zu der Längsachse aufweisen, und der erste Bereich in einen zweiten Bereich übergeht, bei dem die Zentrierflächen in dem Schnitt senkrecht zur Längsachse einen kleineren zweiten Abstand zu der Längsachse aufweisen. Das Verfahren weist die folgenden Schritte auf: Einführen der Klemmflächen des Vorsprungs zwischen den ersten Bereichen der Zentrierflächen in die Ausnehmung und Rotation des Schneidkopfes relativ zu dem Werkzeugschaft um die Längsachse in eine Klemmposition, so dass die Klemmflächen eine kraftschlüssige Verbindung mit den zweiten Bereichen der Zentrierflächen eingehen.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine perspektivische Darstellung eines Fräswerkzeugs gemäß einer Ausführungsform;
- Fig. 2:: eine Seitenansicht des Fräswerkzeugs gemäß der Ausführungsform;
- Fig. 3:: eine Schnittdarstellung entlang der Linie A-A von Fig. 2;
- Fig. 4:: eine Fig. 3 entsprechende Schnittdarstellung, jedoch ohne Befestigungsschraube;
- Fig. 5:: eine perspektivische Darstellung einer Gewindebuchse bei der Ausführungsform;
- Fig. 6:: eine schematische Prinzipdarstellung zur Erläuterung der Klemmverbindung bei der Ausführungsform;
- Fig. 7:: eine perspektivische Darstellung des Werkzeugschafts bei der Ausführungsform;
- Fig. 8:: eine Schnittdarstellung des Werkzeugschafts;
- Fig. 9:: eine perspektivische Darstellung eines Schneidkopfes bei der Ausführungsform;
- Fig. 10:: eine weitere perspektivische Darstellung des Schneidkopfes;
- Fig. 11:: eine Draufsicht auf die Stirnseite des Schneidkopfes;
- Fig. 12:: eine Draufsicht auf die Rückseite des Schneidkopfes;
- Fig. 13:: einen Schnitt senkrecht zu der Längsachse im Bereich eines Vorsprungs und einer Ausnehmung einer Klemmverbindung in einer ersten Stellung;
- Fig. 14:: einen Schnitt senkrecht zu der Längsachse im Bereich des Vorsprungs und der Ausnehmung der Klemmverbindung in einer zweiten Stellung;
- Fig. 15:: eine Fig. 11 entsprechende Prinzipdarstellung zur Erläuterung der Klemmverbindung zwischen dem Schneidkopf und dem Werkzeugschaft; und
- Fig. 16:: eine Fig. 12 entsprechende Prinzipdarstellung zur Erläuterung der Klemmverbindung.

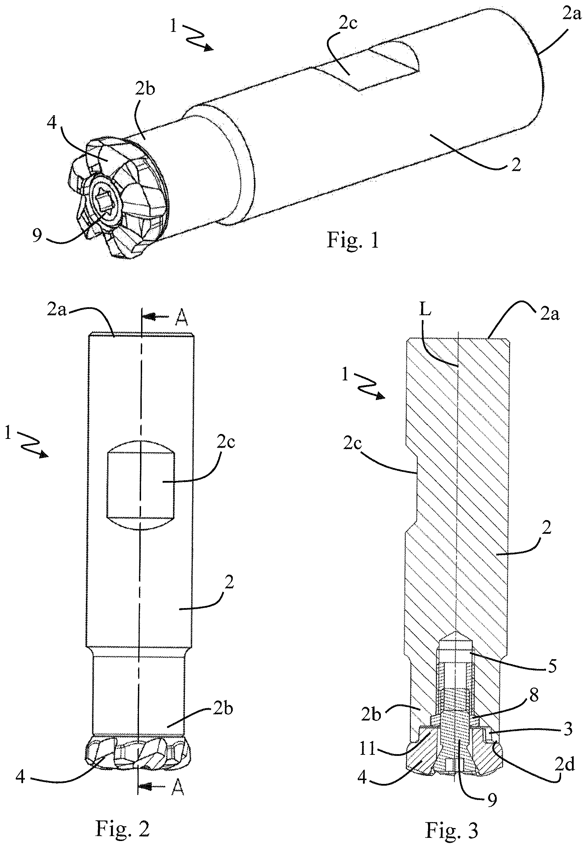

Ein Fräswerkzeug 1 gemäß einer Ausführungsform der vorliegenden Erfindung wird nachfolgend unter Bezug auf die Fig. 1 bis 16 beschrieben.

Das Fräswerkzeug 1 weist einen Werkzeugschaft 2 auf, der dazu ausgebildet ist, mit einem rückseitigen Ende 2a an einer entsprechenden Aufnahme einer Fräsmaschine befestigt zu werden. Der Werkzeugschaft 2 weist eine Längsachse L auf, die im Betrieb des Fräswerkzeugs 1 in einer Fräsmaschine gleichzeitig die Rotationsachse des Fräswerkzeugs 1 bildet. Der Werkzeugschaft 2 weist im Wesentlichen eine zylindrische Grundform auf, wobei bei dem dargestellten Ausführungsbeispiel der Außendurchmesser an einem dem rückseitigen Ende 2a gegenüberliegenden stirnseitigen Ende 2b etwas geringer ist, als an dem rückseitigen Ende 2a.

Wie insbesondere in den Fig. 1 bis Fig. 3 zu sehen ist, weist der Werkzeugschaft 2 an seinen Außenumfang eine Einkerbung 2c für eine verdrehsichere Befestigung an der Aufnahme der Fräsmaschine auf.

An dem stirnseitigen Ende 2b des Werkzeugschafts 2 ist eine Ausnehmung 3 ausgebildet, die im Folgenden noch eingehender beschrieben wird. Die Ausnehmung 3 ist derart ausgebildet, dass ein Schneidkopf 4 stirnseitig an dem Werkzeugschaft 2 befestigbar ist. Die Ausnehmung 3 ist an dem stirnseitigen Ende 2b von einer flachen Anlagefläche 2d umgeben, die sich senkrecht zu der Längsachse L des Werkzeugschafts 2 erstreckt und eine große Abstützung für den an dem Werkzeugschaft 2 befestigten Schneidkopf 4 bildet.

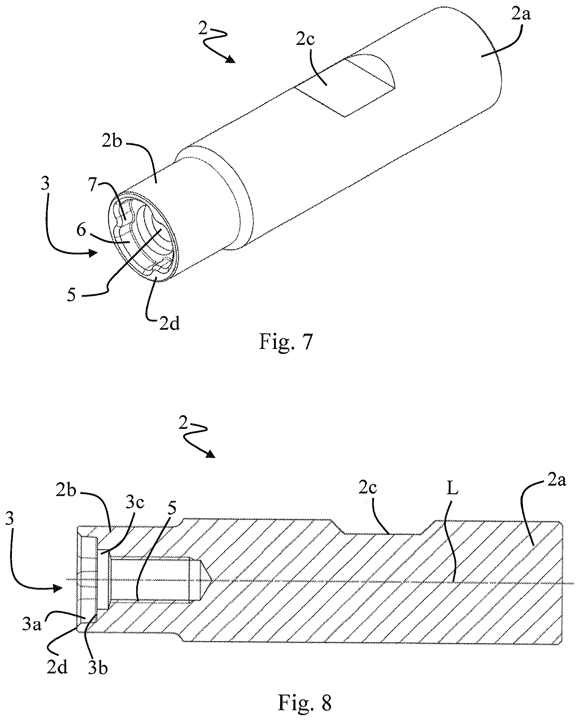

Wie insbesondere in den Fig. 7 und Fig. 8 zu sehen ist, weist die Ausnehmung 3 angrenzend an das freie Ende einen ersten Abschnitt 3a mit einem relativ großen Querschnitt auf. An den ersten Abschnitt 3a schließt sich über eine Schulter 3b ein im Wesentlichen zylindrischer zweiter Abschnitt 3c mit einem kleineren Querschnitt an, dem sich über eine weitere Schulter eine zu der Längsachse L koaxiale Gewindebohrung 5 anschließt. Die Gewindebohrung 5 ist als Sackloch ausgeführt, das mit einem Innengewinde versehen ist, dessen Funktion noch eingehender beschrieben wird. Die Gewindebohrung 5 weist in der Richtung senkrecht zu der Längsachse L einen Querschnitt auf, der kleiner als der Querschnitt des ersten Abschnitts 3a der Ausnehmung 3 ist.

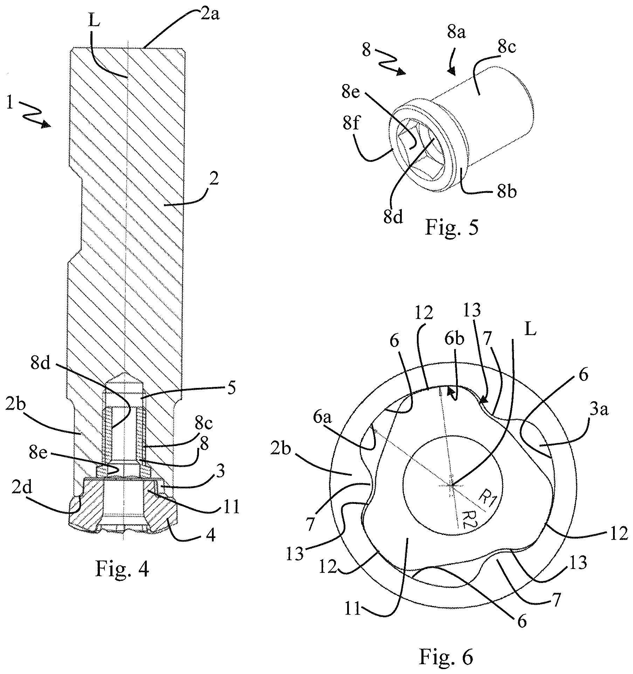

Die Form des ersten Abschnitts 3a der Ausnehmung 3 wird unter Bezug auf die Fig. 6 und Fig. 7 eingehender erläutert. Wie in Fig. 6 zu sehen ist, weist der erste Abschnitt 3a in der Ebene senkrecht zu der Längsachse L eine Form auf, die einem stilisierten dreiblättrigen Kleeblatt ähnelt. Die Seitenwände der Ausnehmung 3 sind in dem ersten Abschnitt 3a durch drei Zentrierflächen 6 gebildet, zwischen denen radial nach innen vorspringende Anschlagabschnitte 7 ausgebildet sind. Die Zentrierflächen 6 und die Anschlagabschnitte 7 sind dabei gleichmäßig über den Umfang des ersten Abschnitts 3a verteilt, so dass der erste Abschnitt 3a bezügliche einer Rotation um die Längsachse L eine n-zählige Symmetrie mit n = 3 aufweist. Mit anderen Worten weist der erste Abschnitt 3a eine drei-zählige Drehsymmetrie bezüglich der Längsachse L auf. Die Zentrierflächen 6 sind konkav ausgebildet. Die Anschlagabschnitte 7 sind in einem Schnitt senkrecht zu der Längsachse L konvex ausgebildet, so dass sie radial nach innen ragende Vorsprünge ausbilden. Bei dem dargestellten Ausführungsbeispiel erstrecken sich die Zentrierflächen 6 und die Anschlagabschnitte 7 jeweils zumindest im Wesentlichen parallel zu der Längsachse L. Gemäß einer Weiterbildung ist es z.B. aber auch möglich, dass sich der Innenquerschnitt des ersten Abschnitts 3a in der Richtung von dem stirnseitigen Ende 2b zu dem rückseitigen Ende 2a des Werkzeugschafts 2 verjüngt.

Wie in Bezug auf eine der Zentrierflächen 6 beispielhaft erläutert wird, weisen die Zentrierflächen 6, in einem Schnitt senkrecht zu der Längsachse L, einen ersten Bereich 6a auf, in dem die Zentrierflächen 6 einen ersten Abstand von der Längsachse L haben. Der erste Bereich 6a geht bei der dargestellten Ausführungsform kontinuierlich in einen zweiten Bereich 6b über, in dem die Zentrierflächen 6 einen kleineren, zweiten Abstand zu der Längsachse L haben. Mit anderen Worten nähern sich die Oberflächen der Zentrierflächen 6 mit fortschreitendem Verlauf um die Längsachse L der Längsachse L. Bei der dargestellten Ausführungsform sind die Zentrierflächen 6 dabei derart ausgerichtet, dass sie sich bei einer Blickrichtung auf das stirnseitige Ende 2b des Werkzeugschaftes 2 mit fortschreitendem Verlauf im Uhrzeigersinn um die Längsachse L der Längsachse L nähern. Abhängig von der beabsichtigten Drehrichtung des Fräswerkzeugs 1 ist es jedoch z.B. auch möglich, die Zentrierflächen 6 so auszubilden, dass sie sich mit fortschreitendem Verlauf entgegen dem Uhrzeigersinn der Längsachse L annähern. Es ist auf jeden Fall bevorzugt, dass sich die Zentrierflächen 6 mit fortschreitendem Verlauf entgegen der beim Einsatz des Fräswerkzeugs 1 vorgesehenen Rotationsrichtung der Längsachse L annähern. Bevorzugt weisen die Zentrierflächen 6 dabei eine konkav gekrümmte Form auf. Die Zentrierflächen 6 können z.B. bevorzugt eine zylindrisch oder elliptisch gekrümmte Form aufweisen, so dass sie sich mit fortschreitender Drehung möglichst gleichmäßig der Längsachse L annähern.

Wie insbesondere in den Fig. 3, Fig. 4 und Fig. 5 zu sehen ist, ist ferner eine Gewindebuchse 8 vorgesehen, die zumindest teilweise in der Gewindebohrung 5 aufgenommen ist. Die Gewindebuchse 8 weist einen Gewindeabschnitt 8a auf, der zumindest bereichsweise mit einem Außengewinde 8c versehen ist, das dazu ausgebildet ist, mit dem Innengewinde der Gewindebohrung 5 zusammenzuwirken. Die Gewindebuchse 8 weist ferner einen Kopfabschnitt 8b auf. Bei der dargestellten Ausführungsform weist der Kopfabschnitt 8b einen etwas größeren Außenumfang als der Gewindeabschnitt 8a auf. Der Kopfabschnitt 8b ist derart bemessen, dass er bei einem Einschrauben des Gewindeabschnitts 8a in die Gewindebohrung 5 in dem zweiten Abschnitt 3c der Ausnehmung 3 aufgenommen werden kann. Die Gewindebuchse 8 weist zumindest an dem Kopfabschnitt 8b einen Außendurchmesser auf, der größer als der Durchmesser einer Bohrung 10 in dem Schneidkopf 4 ist, wie noch eingehender beschrieben wird. Die Stirnseite 8f des Kopfabschnitts 8b weist eine Fläche auf, die dazu ausgebildet ist, gegen eine Unterseite des Schneidkopfes 4 zu drücken. In dem Gewindeabschnitt 8a ist die Gewindebuchse 8 ferner zumindest bereichsweise mit einem Innengewinde 8d versehen, das dazu ausgebildet ist, mit einem Außengewinde einer Befestigungsschraube 9 zum Befestigen des Schneidkopfes 4 an dem Werkzeugschaft 2 zusammenzuwirken.

In dem Bereich des Kopfabschnitts 8b ist die Gewindebuchse 8 auf der Innenseite ferner mit einem Profil 8e zum Eingreifen mit einem Schraubwerkzeug versehen. Bei der dargestellten Ausführungsform ist das Profil 8e zum Eingreifen mit einem Schraubwerkzeug z.B. als ein Innen-Sechskant ausgebildet. Es ist aber auch eine andere Formgebung möglich, die ein Zusammenwirken mit einem entsprechenden Schraubwerkzeug ermöglicht. Wie insbesondere in Fig. 4 zu sehen ist, weist das Profil 8e zum Eingreifen mit einem Schraubwerkzeug einen freien Innenquerschnitt auf, der etwas größer ist als der Durchmesser des Innengewindes 8d. In dieser Weise ist erreicht, dass das Außengewinde der Befestigungsschraube 9 durch den Kopfabschnitt 8b hindurch zu dem Innengewinde 8d geführt werden kann.

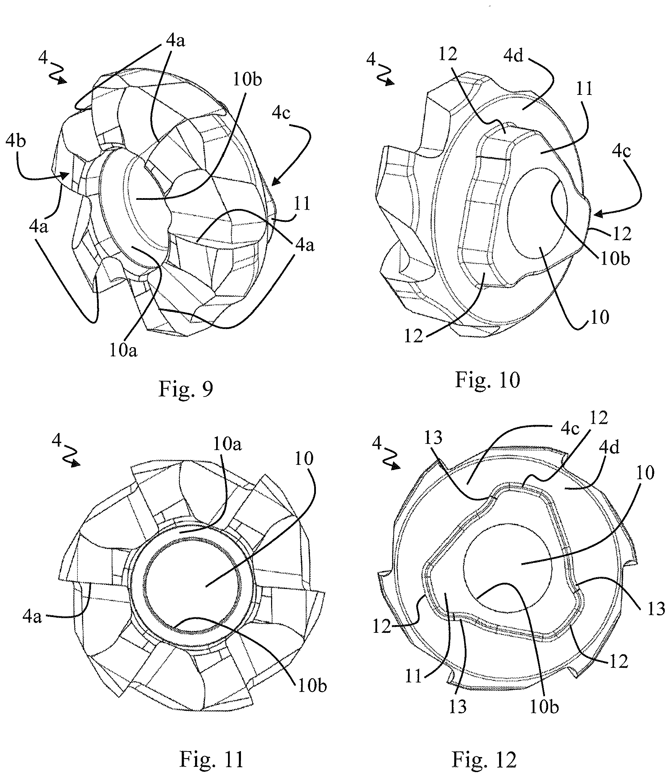

Die Ausgestaltung des Schneidkopfes 4 bei dem vorliegenden Ausführungsbeispiel wird nun unter Bezug auf die Fig. 9 bis Fig. 12 eingehender beschrieben. Der Schneidkopf 4 ist bei der Ausführungsform als ein einstückiges, in einem pulvermetallurgischen Herstellungsprozess durch Pressen und Sintern gefertigtes Bauteil aus Hartmetall oder Cermet ausgebildet. Der Schneidkopf 4 ist mit einer Mehrzahl von Schneiden 4a zur zerspanenden Bearbeitung eines Werkstücks versehen. Bei dem in den Figuren dargestellten Ausführungsbeispiel ist der Schneidkopf 4 speziell für ein Fräsen mit großen Vorschüben (high-feed milling) ausgebildet, wie aus der Anordnung der Schneiden 4a ersichtlich ist. Es ist jedoch auch möglich, andersgeartete Schneiden vorzusehen, so dass der Schneidkopf 4 für andere Fräsoperationen eingesetzt werden kann.

Der Schneidkopf 4 ist mit einer Bohrung 10 versehen, die sich in der axialen Richtung durch den Schneidkopf 4 hindurch erstreckt und den Schneidkopf 4 von der Stirnseite 4b zu der Rückseite 4c durchdringt. Die Bohrung verläuft koaxial zu einer Längsachse des Schneidkopfes 4, die mit der Längsachse L des Werkzeugschaftes 2 übereinstimmt. Die Bohrung 10 ist zur Aufnahme einer Befestigungsschraube 9 zum Befestigen des Schneidkopfes 4 an dem Werkzeugschaft 2 ausgebildet. Auf ihrer der Stirnseite 4b zugewandten Seite weist die Bohrung 10 einen ersten Abschnitt mit einem erweiterten Querschnitt auf, der dazu ausgebildet ist, den Kopf der Befestigungsschraube 9 aufzunehmen. Der erste Abschnitt weist zumindest eine Anlagefläche 10a auf, an der sich die Unterseite des Kopfes der Befestigungsschraube 9 abstützt, um den Schneidkopf 4 gegen den Werkzeugschaft 2 zu spannen. Bei dem Ausführungsbeispiel weist der erste Abschnitt z.B. einen sich in Richtung der Rückseite 4c des Schneidkopfes 4 konisch verjüngenden Querschnitt zur Aufnahme eines kegeligen Senkkopfes der Befestigungsschraube 9 auf. Es sind jedoch z.B. auch andere Ausgestaltungen möglich, wie insbesondere eine gestufte Ausgestaltung zur Aufnahme eines flachen oder zylindrischen Kopfes der Befestigungsschraube 9.

Der erste Abschnitt geht bei dem Ausführungsbeispiel in einen zweiten Abschnitt 10b über, der einen kleineren Durchmesser mit im Wesentlichen zylindrischem Querschnitt aufweist. Der Durchmesser des zweiten Abschnitts 10b ist so bemessen, dass das Außengewinde an einem Gewindeabschnitt der Befestigungsschraube 9 durch den zweiten Abschnitt 10b hindurchgeführt werden kann. Der Durchmesser des zweiten Abschnitts 10b ist ferner so bemessen, dass er kleiner als der Außendurchmesser des Kopfabschnitts 8b der Gewindebuchse 8 ist.

Bei dem gezeigten Ausführungsbeispiel ist an der Rückseite 4c des Schneidkopfes 4 ein Vorsprung 11 ausgebildet. Der Vorsprung 11 weist einen kleineren Außenumfang als die Stirnseite 4b des Schneidkopfes 4 auf, so dass auf der Rückseite 4c des Schneidkopfes 4 eine flache Auflagefläche 4d ausgebildet ist, mit der sich der Schneidkopf 4 an der flachen Anlagefläche 2d des Werkzeugschaftes 2 abstützt. Bei dem Ausführungsbeispiel erstreckt sich die Auflagefläche 4d in einer Ebene senkrecht zu der Längsachse L um den Vorsprung 11 herum. Der Vorsprung 11 weist in der axialen Richtung eine Höhe auf, die etwas geringer ist als die Tiefe des ersten Abschnitts 3a der Ausnehmung 3. In dieser Weise ist sichergestellt, dass sich der Schneidkopf 4 zuverlässig mit der Auflagefläche 4d an der flachen Anlagefläche 2d des Werkzeugschaftes 2 abstützt. Die Bohrung 10, insbesondere deren zweiter Abschnitt 10b, erstreckt sich auch durch den Vorsprung 11 hindurch.

Der Vorsprung 11 und die Ausnehmung 3 bilden zusammen einen Teil einer Klemmverbindung zwischen dem Schneidkopf 4 und dem Werkzeugschaft 2. Dabei bewirken der Vorsprung 11 und die Ausnehmung 3 zusammenwirkend die Klemmung, wie noch eingehender beschrieben wird.

Die Außenkontur des Vorsprungs 11 wird im Folgenden unter Bezug auf die Fig. 6, Fig. 10 und Fig. 12 eingehender beschrieben. Der Vorsprung 11 weist eine Mehrzahl n von Klemmflächen 12 auf, die dazu ausgebildet sind, mit den Zentrierflächen 6 der Ausnehmung 3 zusammenzuwirken. Bei dem Ausführungsbeispiel weist der Vorsprung 11 drei Klemmflächen 12 auf (n = 3). Die Klemmflächen 12 erstrecken sich in einem Schnitt senkrecht zu der Längsachse L entlang der Kontur eines gemeinsamen Kreises, dessen Zentrum sich auf der Längsachse L befindet. Die Klemmflächen 12 bilden in dem Schnitt senkrecht zu der Längsachse L die radial am weitesten hervorstehenden Bereiche des Vorsprungs 11. Bei dem dargestellten Ausführungsbeispiel erstrecken sich die Klemmflächen 12 entlang einer gemeinsamen Zylinderoberfläche, wobei die Zylinderachse der Längsachse L entspricht. Wie in Bezug auf den ersten Abschnitt 3a der Ausnehmung 3 bereits beschrieben wurde, ist es z.B. auch möglich, den Vorsprung 11 so auszubilden, dass sich dessen Außenumfang zu der dem Werkzeugschaft 2 zugewandten Seite leicht verjüngt. In diesem Fall können sich die Klemmflächen 12 z.B. auch entlang einer gemeinsamen Kegeloberfläche erstrecken, wobei die Kegelachse entlang der Längsachse L verläuft. Obwohl bei dem Ausführungsbeispiel relativ großflächig ausgebildete Klemmflächen 12 dargestellt sind, die sowohl in der axialen Richtung als auch in der tangentialen Richtung eine relativ große Erstreckung aufweisen, kann die Größe der Klemmflächen 12 auch reduziert werden, ohne die Funktionsweise wesentlich zu beeinflussen. Im Extremfall können die Klemmflächen 12 auf beinahe punktförmige Kontaktbereiche mit den Zentrierflächen 6 verringert werden.

Die Klemmflächen 12 sind symmetrisch über den Umfang des Vorsprungs 11 verteilt und zwischen den Klemmflächen 12 sind Abflachungen 13 zum Abstützen an den radial nach innen vorstehenden Anschlagabschnitten 7, die in der Ausnehmung 3 vorgesehen sind, angeordnet. Im Bereich der Abflachungen 13 liegt die Kontur des Vorsprungs 11 in einem Schnitt senkrecht zu der Längsachse L vollständig innerhalb des gemeinsamen Kreises, entlang dem sich die Klemmflächen 12 erstrecken. In tangentialer Richtung sind die Klemmflächen 12 wesentlich schmaler als die entsprechenden Zentrierflächen 6, die in der Ausnehmung 3 ausgebildet sind. Bei dem Ausführungsbeispiel sind die Klemmflächen 12 in etwa halb so breit wie die Zentrierflächen 6, wie in den Fig. 6, Fig. 13 und Fig. 14 zu sehen ist. Aufgrund dieser Ausgestaltung hat der Vorsprung 11 in einem Schnitt senkrecht zu der Längsachse L eine Kontur, die in etwa einem gleichschenkligen Dreieck mit abgerundeten Ecken entspricht, wobei die abgerundeten Ecken durch die Klemmflächen 12 gebildet sind.

Wie in den Fig. 9 bis Fig. 12 zu sehen ist, ist der Schneidkopf 4 frei von Hinterschneidungen ausgebildet, so dass eine direkte pulvermetallurgische Fertigung durch Pressen und Sintern ermöglicht ist, bei der nur in dem Bereich der Schneiden 4a eine mechanische Nachbearbeitung durch Schleifen erforderlich ist.

Das Befestigen und Lösen des Schneidkopfes 4 an dem Werkzeugschaft 2 wird nun unter Bezugnahme auf die Fig. 3 und Fig. 13 bis Fig. 16 eingehender beschrieben.

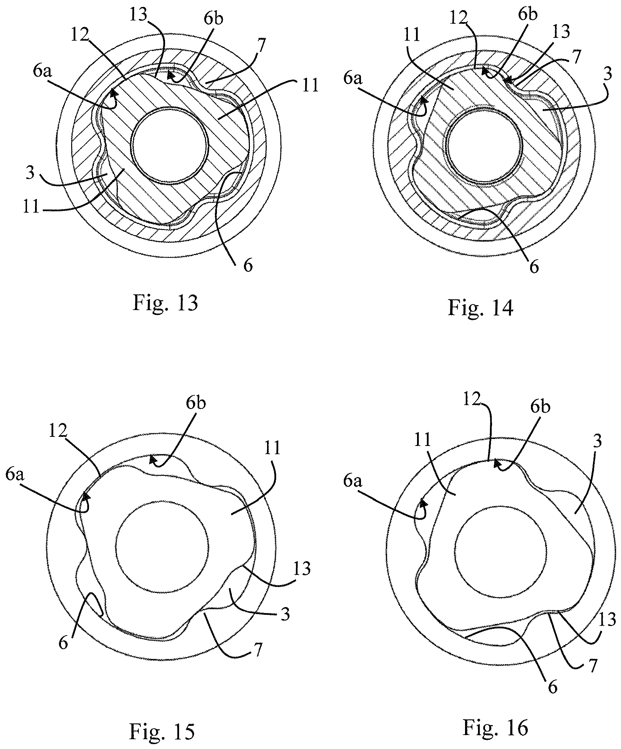

Zum Befestigen des Schneidkopfes 4 an dem Werkzeugschaft 2 wird zunächst die Gewindebuchse 8 in die Gewindebohrung 5 des Werkzeugschaftes 2 eingeschraubt, so dass der Kopfabschnitt 8b der Gewindebuchse 8 in dem zweiten Abschnitt 3c der Ausnehmung 3 aufgenommen ist. Anschließend wird der Vorsprung 11 in den ersten Abschnitt 3a der Ausnehmung 3 eingeführt, wobei die Klemmflächen 12 zum Einführen gegenüber den ersten Bereichen 6a der Zentrierflächen 6 angeordnet werden, wie in den Fig. 13 und Fig. 15 dargestellt ist. Der Abstand der ersten Bereiche 6a der Zentrierflächen 6 von der Längsachse L ist so gewählt, dass er etwas größer ist als der Abstand der Klemmflächen 12 von der Längsachse L, so dass der Vorsprung 11 in dieser Ausrichtung in die Ausnehmung 3 eingeführt werden kann. Der Schneidkopf 4 und der Werkzeugschaft 2 werden dabei solange in der Längsrichtung zueinander bewegt, bis sich die Auflagefläche 4d des Schneidkopfes 4 an der Anlagefläche 2d des Werkzeugschaftes 2 abstützt.

Durch Rotation des Schneidkopfes 4 relativ zu dem Werkzeugschaft 2 um die Längsachse L werden die Klemmflächen 12 des Vorsprungs 11 in der tangentialen Richtung von den ersten Bereichen 6a zu den zweiten Bereichen 6b der Zentrierflächen 6 in der Ausnehmung 3 bewegt, wie in den Fig. 14 und Fig. 16 dargestellt ist. Die Klemmflächen 12 bewegen sich dabei entlang der Zentrierflächen 6. Der Abstand der zweiten Bereiche 6b der Zentrierflächen 6 von der Längsachse L ist so gewählt, dass er etwas kleiner ist als der Abstand der Klemmflächen 12 von der Längsachse L. Bei der Rotation des Schneidkopfes 4 relativ zu dem Werkzeugschaft 2 drücken somit die Zentrierflächen 6 im Wesentlichen in der radialen Richtung gegen die Klemmflächen 12, so dass sich eine kraftschlüssige Klemmverbindung zwischen den Klemmflächen 12 und den Zentrierflächen 6 ausbildet. Bei dieser Bewegung erfolgt gleichzeitig eine Zentrierung des Schneidkopfes 4 relativ zu dem Werkzeugschaft 2.

Die mögliche Rotation des Schneidkopfes 4 relativ zu dem Werkzeugschaft 2 ist durch die Anschlagabschnitte 7 und die damit zusammenwirkenden Abflachungen 13 begrenzt, die eine weitere Relativbewegung verhindern, wenn sich die Klemmflächen 12 gegenüber den zweiten Bereichen 6b der Zentrierflächen 6 befinden. Aufgrund dieser Begrenzung der weiteren Verdrehung kann über den Winkel, den die Zentrierflächen 6 mit den Klemmflächen 12 in ihrem Kontaktbereich miteinander einschließen und über den ermöglichten Drehwinkel, der im Wesentlichen durch die Breite der Klemmflächen 12 im Verhältnis zu der Breite der Zentrierflächen 6 in der tangentialen Richtung vorgegeben ist, die wirkende Kraft für die kraftschlüssige Verbindung des Schneidkopfes 4 mit dem Werkzeugschaft 2 zuverlässig vorgegeben werden. Der Winkel, den die Zentrierflächen 6 mit den Klemmflächen 12 in dem Kontaktbereich miteinander einschließen, kann dabei darüber vorgegeben werden, wie stark sich die Zentrierflächen 6 von dem ersten Bereich 6a zu dem zweiten Bereich 6b der Längsachse annähern. Bei dem Ausführungsbeispiel ist bei der Bewegung in die Klemmposition eine relative Rotation des Schneidkopfes 4 zu dem Werkzeugschaft 2 um etwa 35° ermöglicht. Um eine zuverlässige kraftschlüssige Befestigung zu erzielen, sollte eine relative Rotation um zumindest 15°, bevorzugt zumindest 20°, mehr bevorzugt zumindest 25° ermöglicht sein.

Die fast ausschließlich in der radialen Richtung wirkenden Kräfte der kraftschlüssigen Verbindung zwischen den Klemmflächen 12 und den Zentrierflächen 6 resultieren darin, dass eine Selbsthemmung auftritt, die verhindert, dass sich der Schneidkopf 4 wieder von dem Werkzeugschaft 2 lösen kann.

Die Befestigung des Schneidkopfes 4 an dem Werkzeugschaft 2 wird dadurch abgeschlossen, dass die Befestigungsschraube 9 mit ihrem Gewindeabschnitt durch die Bohrung 10 hindurchgeführt und in das Innengewinde 8d der Gewindebuchse 8 eingeschraubt wird, bis sich die Unterseite des Kopfes der Befestigungsschraube 9 an der Anlagefläche 10c der Bohrung 10 abstützt. Durch die bereits ausgebildete kraftschlüssige Verbindung zwischen dem Schneidkopf 4 und dem Werkzeugschaft 2 sind die im Betrieb des Fräswerkzeugs 1 auf die Befestigungsschraube 9 wirkenden Kräfte sehr gering.

Zum Lösen des Schneidkopfes 4 von dem Werkzeugschaft 2 wird die Befestigungsschraube 9 wieder aus dem Innengewinde 8d der Gewindebuchse 8 herausgeschraubt und von dem Fräswerkzeug 1 entnommen. Aufgrund der kraftschlüssigen Verbindung, die zwischen den Klemmflächen 12 und den zweiten Bereichen 6b der Zentrierflächen 6 ausgebildet ist, löst sich der Schneidkopf 4 in diesem Zustand noch nicht von dem Werkzeugschaft 2. Nach dem Entfernen der Befestigungsschraube 9 kann ein Schraubwerkzeug, wie z.B. ein Sechskant-Schraubwerkzeug, durch die Bohrung 10 hindurchgeführt und mit dem Profil 8e zum Eingreifen mit einem Schraubwerkzeug in der Gewindebuchse 8 in Eingriff gebracht werden. Durch Ausschrauben der Gewindebuchse 8 aus der Gewindebohrung 5 bewegt sich die Stirnseite 8f der Gewindebuchse 8 gegen die Unterseite des Schneidkopfes 4, so dass durch weiteres Ausschrauben der Gewindebuchse 8 die kraftschlüssige Verbindung zwischen dem Schneidkopf 4 und dem Werkzeugschaft 2 gelöst werden kann, indem der Vorsprung 11 aus dem ersten Abschnitt 3a der Ausnehmung 3 herausgedrückt wird. In dieser Weise ist ein zuverlässiges Lösen des Schneidkopfes 4 von dem Werkzeugschaft 2 selbst dann ermöglicht, wenn relativ große Klemmkräfte zwischen den Klemmflächen 12 und den zweiten Bereichen 6b der Zentrierflächen 6 wirken.

### ABWANDLUNG

Obwohl eine Ausführungsform beschrieben wurde, bei der der Vorsprung 11 der Klemmverbindung an dem Schneidkopf 4 ausgebildet ist und die Ausnehmung 3 an dem Werkzeugschaft 2, ist es auch möglich, eine umgekehrte Anordnung von Vorsprung 11 und Ausnehmung 3 vorzusehen. In diesem Fall ist der Vorsprung 11 stirnseitig an dem Werkzeugschaft 2 vorgesehen und weist in gleicher Weise die Klemmflächen 12 und die Abflachungen 13 auf und die Ausnehmung 3 ist in der Rückseite 4c des Schneidkopfes 4 ausgebildet und weist in gleicher Weise die Zentrierflächen 6 und die zwischen diesen angeordneten Anschlagabschnitte 7 auf. Auch in diesem Fall kann die Gewindebuchse 8 vorgesehen sein und in einer koaxialen Bohrung angeordnet sein, die sich von dem freien Ende in den Vorsprung 11 hinein erstreckt.

## Patentansprüche

1. Fräswerkzeug (1) mit:
einem Werkzeugschaft (2) mit einer Längsachse (L) und
einem stirnseitig an dem Werkzeugschaft (2) befestigten Schneidkopf (4), der eine Mehrzahl von Schneiden (4a) zur zerspanenden Bearbeitung eines Werkstücks aufweist,
wobei der Werkzeugschaft (2) und der Schneidkopf (4) über eine Klemmverbindung miteinander verbunden sind,
wobei die Klemmverbindung einen Vorsprung (11) mit umfangsseitig einer Mehrzahl von Klemmflächen (12) und eine Ausnehmung (3) mit umfangsseitig einer Mehrzahl von mit den Klemmflächen (12) zusammenwirkenden Zentrierflächen (6) aufweist,
wobei die Zentrierflächen (6) jeweils einen ersten Bereich (6a) aufweisen, bei dem die Zentrierflächen (6) in einem Schnitt senkrecht zur Längsachse (L) einen ersten Abstand zu der Längsachse (L) aufweisen, und der erste Bereich (6a) in einen zweiten Bereich (6b) übergeht, bei dem die Zentrierflächen (6) in dem Schnitt senkrecht zur Längsachse (L) einen kleineren zweiten Abstand zu der Längsachse (L) aufweisen,
so dass die Klemmflächen (12) des Vorsprungs (11) zwischen den ersten Bereichen (6a) der Zentrierflächen (6) in die Ausnehmung (3) einführbar sind und durch Rotation des Schneidkopfes (4) relativ zu dem Werkzeugschaft (2) um die Längsachse (L) in eine Klemmposition bewegbar sind, in der die Klemmflächen (12) kraftschlüssig mit den zweiten Bereichen (6b) der Zentrierflächen (6) zusammenwirken,
**dadurch gekennzeichnet, dass** die Ausnehmung (3) zwischen den Zentrierflächen (6) gegenüber den Zentrierflächen (6) radial nach innen vorspringende Anschlagabschnitte (7) aufweist, die eine Rotation des Schneidkopfes (4) relativ zu dem Werkzeugschaft (2) um die Längsachse (L) begrenzen.

2. Fräswerkzeug nach Anspruch 1, **dadurch gekennzeichnet, dass** die Klemmflächen (12) in einem Schnitt senkrecht zur Längsachse (L) betrachtet auf einem gemeinsamen Kreis verlaufen, dessen Zentrum auf der Längsachse (L) liegt.

3. Fräswerkzeug nach einem der vorangehenden Ansprüche, **dadurch gekennzeichnet, dass** sich die Klemmflächen (12) entlang einer gemeinsamen Zylinder- oder Kegeloberfläche erstrecken, deren Symmetrieachse mit der Längsachse (L) zusammenfällt.

4. Fräswerkzeug nach einem der vorangehenden Ansprüche, **dadurch gekennzeichnet, dass** der Vorsprung (11) drei Klemmflächen (12) aufweist.

5. Fräswerkzeug nach einem der vorangehenden Ansprüche, **dadurch gekennzeichnet, dass** die Klemmflächen (12) in einem Schnitt senkrecht zu der Längsachse (L) die radial am weitesten hervorstehenden Bereiche des Vorsprungs (11) bilden.

6. Fräswerkzeug nach einem der vorangehenden Ansprüche, **dadurch gekennzeichnet, dass** der Schneidkopf (4) eine Bohrung (10) zur Aufnahme einer Befestigungsschraube (9) aufweist und die Bohrung (10) sich in der axialen Richtung durch den Schneidkopf (4) hindurch erstreckt.

7. Fräswerkzeug nach einem der vorangehenden Ansprüche, **dadurch gekennzeichnet, dass** in dem Werkzeugschaft (2) eine koaxiale Gewindebohrung (5) zur Befestigung des Schneidkopfes (4) an dem Werkzeugschaft (2) ausgebildet ist.

8. Fräswerkzeug nach Anspruch 7, mit einer Gewindebuchse (8), die ein Außengewinde (8c) zum Zusammenwirken mit der Gewindebohrung (5) in dem Werkzeugschaft (2) und ein Innengewinde (8d) zum Zusammenwirken mit einer Befestigungsschraube (9) zum Befestigen des Schneidkopfes (4) aufweist.

9. Fräswerkzeug nach Anspruch 8, **dadurch gekennzeichnet, dass** die Gewindebuchse (8) zumindest auf einer dem Schneidkopf (4) zugewandten Seite einen Außendurchmesser aufweist, der größer ist als ein Innendurchmesser einer Bohrung (10) in dem Schneidkopf (4).

10. Fräswerkzeug nach einem der Ansprüche 8 oder 9, **dadurch gekennzeichnet, dass** die Gewindebuchse (8) auf einer dem Schneidkopf (4) zugewandten Seite mit einem Profil (8e) zum Eingreifen mit einem Schraubwerkzeug versehen ist.

11. Fräswerkzeug nach Anspruch 10, **dadurch gekennzeichnet, dass** der Schneidkopf (4) eine Bohrung (10) zur Aufnahme einer Befestigungsschraube (9) aufweist, wobei der Durchmesser der Bohrung (10) derart auf das Profil (8e) zum Eingreifen mit einem Schraubwerkzeug abgestimmt ist, dass ein Schraubwerkzeug durch die Bohrung (10) in dem Schneidkopf (4) hindurch mit dem Profil (8e) in Eingriff bringbar ist.

12. Fräswerkzeug nach einem der vorangehenden Ansprüche, **dadurch gekennzeichnet, dass** der Vorsprung (11) der Klemmverbindung einstückig mit dem Schneidkopf (4) ausgebildet ist und die Ausnehmung (3) der Klemmverbindung stirnseitig in dem Werkzeugschaft (2) ausgebildet ist.

13. Fräswerkzeug nach einem der Ansprüche 1 bis 11, **dadurch gekennzeichnet, dass** der Vorsprung (11) der Klemmverbindung einstückig mit dem Werkzeugschaft (2) ausgebildet ist und die Ausnehmung (3) der Klemmverbindung in dem Schneidkopf (4) ausgebildet ist.

14. Fräswerkzeug nach einem der vorangehenden Ansprüche, **dadurch gekennzeichnet, dass** der Schneidkopf (4) aus einem Hartwerkstoff, insbesondere Hartmetall oder einem Cermet, ausgebildet ist.

15. Verwendung eines Schneidkopfes (4) an einem Werkzeugschaft (2), wobei der Schneidkopf (4) eine Mehrzahl von Schneiden (4a) zur zerspanenden Bearbeitung eines Werkstücks und einen einstückig mit dem Schneidkopf (4) ausgebildeten Vorsprung (11) mit einer Mehrzahl von Klemmflächen (12) zum gleichzeitigen Klemmen und Zentrieren des Schneidkopfes (4) in einer Ausnehmung (3) an dem Werkzeugschaft (2) aufweist,
wobei die Klemmflächen (12) zur Ausbildung einer kraftschlüssigen Verbindung mit in der Ausnehmung (3) ausgebildeten Zentrierflächen (6) ausgebildet sind und wobei die sich die Klemmflächen (12) in einem Schnitt senkrecht zu einer Längsachse (L) des Schneidkopfes (4) entlang der Kontur eines gemeinsamen Kreises erstrecken, dessen Zentrum auf der Längsachse (L) liegt, wobei der Werkzeugschaft (2) eine Längsachse (L) und eine stirnseitige Ausnehmung (3) aufweist, die umfangsseitig eine Mehrzahl von mit den Klemmflächen (12) zusammenwirkenden Zentrierflächen (6) und zwischen den Zentrierflächen (6) gegenüber den Zentrierflächen (6) radial nach innen vorspringende Anschlagabschnitte (7) aufweist, wobei die Zentrierflächen (6) jeweils einen ersten Bereich (6a) aufweisen, bei dem die Zentrierflächen (6) in einem Schnitt senkrecht zur Längsachse (L) einen ersten Abstand zu der Längsachse (L) aufweisen, und der erste Bereich (6a) in einen zweiten Bereich (6b) übergeht, bei dem die Zentrierflächen (6) in dem Schnitt senkrecht zur Längsachse (L) einen kleineren zweiten Abstand zu der Längsachse (L) aufweisen,
wobei die Verwendung des Schneidkopfes (4) derart erfolgt, dass die Klemmflächen (12) in eine kraftschlüssige Verbindung mit den zweiten Bereichen (6b) der Zentrierflächen (6) gebracht werden und dass die Anschlagabschnitte (7) eine Rotation des Schneidkopfes (4) relativ zu dem Werkzeugschaft (2) um die Längsachse (L) begrenzen.

16. Verwendung nach Anspruch 15, wobei der Vorsprung (11) zwischen benachbarten Klemmflächen (12) angeordnete Abflachungen (13) zum Abstützen an radial nach innen vorstehenden Anschlagabschnitten (7) in der Ausnehmung (3) aufweist.

17. Verfahren zum Befestigen eines Schneidkopfes (4) an einem Werkzeugschaft (2) eines Fräswerkzeugs,
wobei der Werkzeugschaft (2) eine Längsachse (L) aufweist und der Schneidkopf (4) eine Mehrzahl von Schneiden (4a) zur zerspanenden Bearbeitung eines Werkstücks aufweist,
wobei der Werkzeugschaft (2) und der Schneidkopf (4) über eine Klemmverbindung miteinander verbunden werden, welche Klemmverbindung einen Vorsprung (11) mit umfangsseitig einer Mehrzahl von Klemmflächen (12) und zwischen benachbarten Klemmflächen (12) angeordneten Abflachungen (13) und eine Ausnehmung (3) mit umfangsseitig einer Mehrzahl von mit den Klemmflächen (11) zusammenwirkenden Zentrierflächen (6) aufweist, wobei die Ausnehmung (3) zwischen den Zentrierflächen (6) gegenüber den Zentrierflächen (6) radial nach innen vorspringende Anschlagabschnitte (7) aufweist, wobei die Zentrierflächen (6) jeweils einen ersten Bereich (6a) aufweisen, bei dem die Zentrierflächen (6) in einem Schnitt senkrecht zur Längsachse (L) einen ersten Abstand zu der Längsachse (L) aufweisen, und der erste Bereich (6a) in einen zweiten Bereich (6b) übergeht, bei dem die Zentrierflächen (6) in dem Schnitt senkrecht zur Längsachse (L) einen kleineren zweiten Abstand zu der Längsachse (L) aufweisen, wobei das Verfahren die Schritte aufweist:
Einführen der Klemmflächen (12) des Vorsprungs (11) zwischen den ersten Bereichen (6a) der Zentrierflächen (6) in die Ausnehmung (3), Rotation des Schneidkopfes (4) relativ zu dem Werkzeugschaft (2) um die Längsachse (L) in eine Klemmposition, so dass die Klemmflächen (12) eine kraftschlüssige Verbindung mit den zweiten Bereichen (6b) der Zentrierflächen (6) eingehen und die Anschlagabschnitte (7) und die damit zusammenwirkenden Abflachungen (13) eine weitere Relativbewegung verhindern.

## Claims

1. A milling tool (1) having:
a tool shank (2) with a longitudinal axis (L) and
a cutting head (4) fastened to the front side of the tool shank (2), said cutting head (4) having a plurality of cutting edges (4a) for machining a workpiece,
wherein the tool shank (2) and the cutting head (4) are connected together via a clamping connection,
wherein the clamping connection has a protrusion (11) circumferentially having a plurality of clamping faces (12), and a recess (3) circumferentially having a plurality of centering faces (6) that interact with the clamping faces (12),
wherein the centering faces (6) each have a first region (6a) in which the centering faces (6) are at a first distance from the longitudinal axis (L) in a section perpendicular to the longitudinal axis (L), and the first region (6a) transitions into a second region (6b) in which the centering faces (6) are at a smaller second distance from the longitudinal axis (L) in the section perpendicular to the longitudinal axis (L), such that the clamping faces (12) of the protrusion (11) are introducible into the recess (3) between the first regions (6a) of the centering faces (6) and are movable, by rotation of the cutting head (4) about the longitudinal axis (L) relative to the tool shank (2), into a clamping position in which the clamping faces (12) interact in a force-fitting manner with the second regions (6b) of the centering faces (6),
**characterized in that** - between the centering faces (6) - the recess (3) has a plurality of stop portions (7), projecting radially inwardly with respect to the centering faces (6), which limit a rotation of the cutting head (4) about the longitudinal axis (L) relative to the tool shank (2).

2. The milling tool as claimed in claim 1, **characterized in that** the clamping faces (12) extend in a common circle, the center of which is located on the longitudinal axis (L), when viewed in a section perpendicular to the longitudinal axis (L).

3. The milling tool as claimed in one of the preceding claims, **characterized in that** the clamping faces (12) extend along a common cylinder or cone surface, the axis of symmetry of which coincides with the longitudinal axis (L).

4. The milling tool as claimed in one of the preceding claims, **characterized in that** the protrusion (11) has three clamping faces (12).

5. The milling tool as claimed in one of the preceding claims **characterized in that** the clamping faces (12) form the radially furthest protruding regions of the protrusion (11) in a section perpendicular to the longitudinal axis (L).

6. The milling tool as claimed in one of the preceding claims, **characterized in that** the cutting head (4) has a bore (10) for receiving a fastening screw (9), and the bore (10) extends in the axial direction through the cutting head (4).

7. The milling tool as claimed in one of the preceding claims, **characterized in that** a coaxial threaded bore (5) for fastening the cutting head (4) to the tool shank (2) is formed in the tool shank (2).

8. The milling tool as claimed in claim 7, having a threaded bush (8), which has an external thread (8c) for interacting with the threaded bore (5) in the tool shank (2), and an internal thread (8d) for interacting with a fastening screw (9) for fastening the cutting head (4).

9. The milling tool as claimed in claim 8, **characterized in that** the threaded bush (8) has an outside diameter, at least on a side facing the cutting head (4), which is greater than an inside diameter of a bore (10) in the cutting head (4).

10. The milling tool as claimed in either of claims 8 and 9, **characterized in that** the threaded bush (8) is provided on a side facing the cutting head (4) with a profile (8e) for engagement by a screwdriving tool.

11. The milling tool as claimed in claim 10, **characterized in that** the cutting head (4) has a bore (10) for receiving a fastening screw (9), wherein the diameter of the bore (10) is coordinated with the profile (8e) for engagement by a screwdriving tool such that a screwdriving tool is able to be brought into engagement with the profile (8e) through the bore (10) in the cutting head (4).

12. The milling tool as claimed in one of the preceding claims, **characterized in that** the protrusion (11) of the clamping connection is formed integrally with the cutting head (4) and the recess (3) of the clamping connection is formed in the front side of the tool shank (2).

13. The milling tool as claimed in one of the claims 1 to 11, **characterized in that** the protrusion (11) of the clamping connection is formed integrally with the tool shank (2) and the recess (3) of the clamping connection is formed in the cutting head (4).

14. The milling tool as claimed in one of the preceding claims, **characterized in that** the cutting head (4) is formed from a hard material, in particular hard metal or a cermet.

15. A use of a cutting head (4) on a tool shank (2),
the cutting head (4) having a plurality of cutting edges (4a) for machining a workpiece, and a protrusion (11), formed integrally with the cutting head (4), having a plurality of clamping faces (12) for the simultaneous clamping and centering of the cutting head (4) in a recess (3) in the tool shank (2), wherein the clamping faces (12) are configured to form a force-fitting connection with centering faces (6) formed in the recess (3), and wherein the clamping faces (12) extend along the contour of a common circle, the center of which is located on the longitudinal axis (L), in a section perpendicular to a longitudinal axis (L) of the cutting head (4), the tool shank (2) having a longitudinal axis (L) and a front-side recess (3) which circumferentially has a plurality of centering faces (6) interacting with the clamping faces (12) and - between the centering faces (6) - a plurality of stop portions (7), projecting radially inwardly with respect to the centering faces (6), wherein the centering faces (6) each have a first region (6a) in which the centering faces (6) are at a first distance from the longitudinal axis (L) in a section perpendicular to the longitudinal axis (L), and the first region (6a) transitions into a second region (6b) in which the centering faces (6) are at a smaller second distance from the longitudinal axis (L) in the section perpendicular to the longitudinal axis (L), wherein the use of the cutting head (4) takes place such that the clamping faces (12) are brought into a force-fitting connection with the second regions (6b) of the centering faces (6) and the stop portions (7) limit a rotation of the cutting head (4) about the longitudinal axis (L) relative to the tool shank (2).

16. The use according to claim 15, wherein the protrusion (11) has flattened portions (13), arranged between adjacent clamping faces (12), for support against radially inwardly protruding stop portions (7) in the recess (3).

17. A method for fastening a cutting head (4) to a tool shank (2) of a milling tool,
wherein the tool shank (2) has a longitudinal axis (L) and
the cutting head (4) has a plurality of cutting edges (4a) for machining a workpiece,
wherein the tool shank (2) and the cutting head (4) are connected together via a clamping connection, which clamping connection has a protrusion (11) circumferentially having a plurality of clamping faces (12) and flattened portions (13) arranged between adjacent clamping faces (12), and a recess (3) circumferentially having a plurality of centering faces (6) that interact with the clamping faces (12), wherein - between the centering faces (6) - the recess (3) has a plurality of stop portions (7), projecting radially inwardly with respect to the centering faces (6),
wherein the centering faces (6) each have a first region (6a) in which the centering faces (6) are at a first distance from the longitudinal axis (L) in a section perpendicular to the longitudinal axis (L), and the first region (6a) transitions into a second region (6b) in which the centering faces (6) are at a smaller second distance from the longitudinal axis (L) in the section perpendicular to the longitudinal axis (L),
wherein the method comprises the steps:
introduction of the clamping faces (12) of the protrusion (11) into the recess (3) between the first regions (6a) of the centering faces (6) and, rotation of the cutting head (4) about the longitudinal axis (L) relative to the tool shank (2) and into a clamping position such that the clamping faces (12) pass into a force-fitting connection with the second regions (6b) of the centering faces (6) and the stop portions (7) and the flattened portions (13) interacting therewith prevent further relative motion.

## Revendications

1. Outil de fraisage (1), comprenant :
une tige d'outil (2) avec un axe longitudinal (L) et une tête de coupe (4) fixée du côté frontal à la tige d'outil (2), qui présente une pluralité d'arêtes de coupe (4a) pour l'usinage par enlèvement de copeaux d'une pièce, la tige d'outil (2) et la tête de coupe (4) étant connectées l'une à l'autre par le biais d'une connexion par serrage, la connexion par serrage présentant une saillie (11) avec, du côté de la périphérie, une pluralité de surfaces de serrage (12), et un évidement (3) avec, du côté de la périphérie, une pluralité de surfaces de centrage (6) coopérant avec les surfaces de serrage (12), les surfaces de centrage (6) présentant chacune une première région (6a) dans laquelle les surfaces de centrage (6), en coupe perpendiculairement à l'axe longitudinal (L), présentent un premier espacement à l'axe longitudinal (L), et la première région (6a) se prolongeant dans une deuxième région (6b), dans laquelle les surfaces de centrage (6), en coupe perpendiculairement à l'axe longitudinal (L), présentent un deuxième, plus petit espacement à l'axe longitudinal (L), de telle sorte que les surfaces de serrage (12) de la saillie (11) puissent être introduites entre les premières régions (6a) des surfaces de centrage (6) dans l'évidement (3) et, par rotation de la tête de coupe (4) par rapport à la tige d'outil (2) autour de l'axe longitudinal (L), puissent être déplacées dans une position de serrage dans laquelle les surfaces de serrage (12) coopèrent par engagement par force avec les deuxièmes régions (6b) des surfaces de centrage (6), **caractérisé en ce que** l'évidement (3) entre les surfaces de centrage (6) présente des portions de butée (7) faisant saillie radialement vers l'intérieur par rapport aux surfaces de centrage (6) qui limitent une rotation de la tête de coupe (4) par rapport à la tige d'outil (2) autour de l'axe longitudinal (L).

2. Outil de fraisage selon la revendication 1, **caractérisé en ce que** les surfaces de serrage (12), vues en coupe perpendiculairement à l'axe longitudinal (L), s'étendent sur un cercle complet dont le centre est situé sur l'axe longitudinal (L).

3. Outil de fraisage selon l'une quelconque des revendications précédentes, **caractérisé en ce que** les surfaces de serrage (12) s'étendent le long d'une surface commune cylindrique ou conique dont l'axe de symétrie coïncide avec l'axe longitudinal (L) .

4. Outil de fraisage selon l'une quelconque des revendications précédentes, **caractérisé en ce que** la saillie (11) présente trois surfaces de serrage (12) .

5. Outil de fraisage selon l'une quelconque des revendications précédentes, **caractérisé en ce que** les surfaces de serrage (12) forment, en coupe perpendiculairement à l'axe longitudinal (L), les régions de la saillie (11) saillant radialement le plus loin.

6. Outil de fraisage selon l'une quelconque des revendications précédentes, **caractérisé en ce que** la tête de coupe (4) présente un alésage (10) pour recevoir une vis de fixation (9) et l'alésage (10) s'étend dans la direction axiale à travers la tête de coupe (4).

7. Outil de fraisage selon l'une quelconque des revendications précédentes, **caractérisé en ce qu'**un alésage fileté coaxial (5) est réalisé dans la tige d'outil (2) pour la fixation de la tête de coupe (4) à la tige d'outil (2).

8. Outil de fraisage selon la revendication 7, comprenant une douille filetée (8) qui présente un filetage extérieur (8c) destiné à coopérer avec l'alésage fileté (5) dans la tige d'outil (2) et un filetage intérieur (8d) destiné à coopérer avec une vis de fixation (9) pour fixer la tête de coupe (4).

9. Outil de fraisage selon la revendication 8, **caractérisé en ce que** la douille filetée (8) présente, au moins sur un côté tourné vers la tête de coupe (4), un diamètre extérieur qui est supérieur à un diamètre intérieur d'un alésage (10) dans la tête de coupe (4).

10. Outil de fraisage selon l'une quelconque des revendications 8 ou 9, **caractérisé en ce que** la douille filetée (8) est pourvue, sur un côté tourné vers la tête de coupe (4), d'un profil (8e) destiné à venir en prise avec un outil de vissage.

11. Outil de fraisage selon la revendication 10, **caractérisé en ce que** la tête de coupe (4) présente un alésage (10) pour recevoir une vis de fixation (9), le diamètre de l'alésage (10) étant adapté au profil (8e) destiné à venir en prise avec un outil de vissage de telle sorte qu'un outil de vissage puisse être amené en prise à travers l'alésage (10) dans la tête de coupe (4) avec le profil (8e).

12. Outil de fraisage selon l'une quelconque des revendications précédentes, **caractérisé en ce que** la saillie (11) de la connexion par serrage est réalisée d'une seule pièce avec la tête de coupe (4) et l'évidement (3) de la connexion par serrage est réalisé du côté frontal dans la tige d'outil (2).

13. Outil de fraisage selon l'une quelconque des revendications 1 à 11, **caractérisé en ce que** la saillie (11) de la connexion par serrage est réalisée d'une seule pièce avec la tige d'outil (2) et l'évidement (3) de la connexion par serrage est réalisé dans la tête de coupe (4).

14. Outil de fraisage selon l'une quelconque des revendications précédentes, **caractérisé en ce que** la tête de coupe (4) est réalisée en un matériau dur, en particulier en métal dur ou en cermet.

15. Utilisation d'une tête de coupe (4) sur une tige d'outil (2), la tête de coupe (4) présentant une pluralité d'arêtes de coupe (4a) pour l'usinage par enlèvement de copeaux d'une pièce et une saillie (11) réalisée d'une seule pièce avec la tête de coupe (4), comprenant une pluralité de surfaces de serrage (12) pour le serrage et le centrage simultanés de la tête de coupe (4) dans un évidement (3) sur la tige d'outil (2),
les surfaces de serrage (12) étant réalisées de manière à fournir une connexion par engagement par force avec des surfaces de centrage (6) réalisées dans l'évidement (3) et les surfaces de serrage (12), en coupe perpendiculairement à un axe longitudinal (L) de la tête de coupe (4), s'étendant le long du contour d'un cercle commun dont le centre est situé sur l'axe longitudinal (L), la tige d'outil (2) présentant un axe longitudinal (L) et un évidement frontal (3) qui présente du côté de la périphérie une pluralité de surfaces de centrage (6) coopérant avec les surfaces de serrage (12), et des portions de butée (7) faisant saillie radialement vers l'intérieur par rapport aux surfaces de centrage (6) entre les surfaces de centrage (6), les surfaces de centrage (6) présentant chacune une première région (6a) dans laquelle les surfaces de centrage (6), en coupe perpendiculairement à l'axe longitudinal (L), présentent un premier espacement à l'axe longitudinal (L), et la première région (6a) se prolongeant dans une deuxième région (6b), dans laquelle les surfaces de centrage (6), en coupe perpendiculairement à l'axe longitudinal (L), présentent un deuxième, plus petit espacement à l'axe longitudinal (L),
l'utilisation de la tête de coupe (4) s'effectuant de telle sorte que les surfaces de serrage (12) soient amenées en liaison par engagement par force avec les deuxièmes régions (6b) des surfaces de centrage (6) et que les portions de butée (7) limitent une rotation de la tête de coupe (4) par rapport à la tige d'outil (2) autour de l'axe longitudinal (L).

16. Utilisation selon la revendication 15, dans laquelle la saillie (11) présente des méplats (13) disposés entre des surfaces de serrage adjacentes (12), destinés à s'appuyer contre des portions de butée (7) saillant radialement vers l'intérieur dans l'évidement (3).

17. Procédé de fixation d'une tête de coupe (4) à une tige d'outil (2) d'un outil de fraisage, la tige d'outil (2) présentant un axe longitudinal (L) et la tête de coupe (4) présentant une pluralité d'arêtes de coupe (4a) pour l'usinage par enlèvement de copeaux d'une pièce, la tige d'outil (2) et la tête de coupe (4) étant connectées l'une à l'autre par le biais d'une connexion par serrage, laquelle connexion par serrage présente une saillie (11) avec, du côté de la périphérie, une pluralité de surfaces de serrage (12), et des méplats (13) disposés entre des surfaces de serrage adjacente (12) et un évidement (3) avec, du côté de la périphérie, une pluralité de surfaces de centrage (6) coopérant avec les surfaces de serrage (11), l'évidement (3) entre les surfaces de centrage (6) présentant des portions de butée (7) faisant saillie radialement vers l'intérieur par rapport aux surfaces de centrage (6), les surfaces de centrage (6) présentant chacune une première région (6a) dans laquelle les surfaces de centrage (6), en coupe perpendiculairement à l'axe longitudinal (L), présentent un premier espacement à l'axe longitudinal (L), et la première région (6a) se prolongeant dans une deuxième région (6b), dans laquelle les surfaces de centrage (6), en coupe perpendiculairement à l'axe longitudinal (L), présentent un deuxième, plus petit espacement à l'axe longitudinal (L), le procédé présentant les étapes suivantes :
introduction des surfaces de serrage (12) de la saillie (11) entre les premières régions (6a) des surfaces de centrage (6) dans l'évidement (3), rotation de la tête de coupe (4) par rapport à la tige d'outil (2) autour de l'axe longitudinal (L) dans une position de serrage de telle sorte que les surfaces de serrage (12) entrent en liaison par engagement par force avec les deuxièmes régions (6b) des surfaces de centrage (6) et que les portions de butée (7) et les méplats (13) coopérant avec celles-ci empêchent un mouvement relatif supplémentaire.
